# EUROPEAN PATENT APPLICATION

(11) **EP 4 826 970 A1**
(43) Date of publication of application: **21.10.2026**
(21) Application number: 25748234.9
(22) Date of filing: 21.01.2025
(51) Int. Cl.: H02K 9/00, B29C 45/14, C08K 3/013, C08K 7/02, C08L 33/14, C08L 81/02, C08L 101/00, C08L 101/06

(54) **MOTOR COMPONENT USING COOLING MEDIUM**

(30) Priority: 30.01.2024 JP 2024011772
(71) Applicant: Toray Industries, Inc., Tokyo 103-8666 (JP)
(72) Inventor: NISHIOKA, Yuki, Nagoya-shi, Aichi 455-8502 (JP); OTA, Yuki, Nagoya-shi, Aichi 455-8502 (JP)
(74) Representative: Prüfer & Partner mbB Patentanwälte · Rechtsanwälte
(86) International application number: PCT/JP2025/001663
(87) International publication number: WO 2025/164425

(57) **Abstract**

The present invention provides a motor component which uses a cooling medium, which has excellent thermal shock resistance after an immersion treatment in the cooling medium, and which can be used in even harsh environments in which contact is made with the cooling medium. Provided is a motor component which uses a cooling medium and which is obtained by molding a polyphenylene sulfide resin composition that is obtained by combining (A) a polyphenylene sulfide resin, (B) an elastomer, (C) a fibrous filler, and (D) a non-fibrous filler, said motor component being characterized in that: the tensile elastic modulus of a molded article comprising the polyphenylene sulfide resin composition is 10-21 GPa; and when the tensile strength of the molded article in the resin flow direction is represented as MD and the tensile strength in the direction perpendicular to resin flow direction is represented as TD, MD is not less than 70 MPa and the ratio MD/TD of MD to TD is not more than 1.4.

## Description

### TECHNICAL FIELD

The present invention relates to a motor component using a cooling medium having excellent thermal shock resistance after an immersion treatment in a cooling medium.

### BACKGROUND ART

In recent years, various efforts have been made on global warming and energy problems from the viewpoint of low environmental load. In particular, to reduce emission of carbon dioxide and nitrogen oxides during traveling, as next-generation automobiles, electric automobiles and fuel cell automobiles using an electric motor as a drive mechanism, hybrid automobiles using a gasoline engine and a motor in combination, and the like have been widely used.

In electric automobiles, the amount of heat generated by a battery or a motor is increasing with an increase in capacity of the battery and an increase in output of the motor, and accordingly, the amount of heat generated by an electrical component through which a high voltage current flows, such as an inverter or a DC-DC converter, is also increasing. In addition, for the purpose of space saving and efficiency improvement, motors are considered to be combined with a gear and an inverter, and further integrated with a DC-DC converter, a power distribution unit, a PTC heater, an in-vehicle charger, and the like. In such a product including a motor, that is, so-called an electric axle (hereinafter, also briefly referred as e-Axle), an increase in the environmental temperature of the entire system has become a problem due to an increase in the amount of heat generation and space saving. Therefore, to improve the efficiency of the thermal management system and increase the life of the components constituting the system, it is extremely important to improve the durability of the components against the cooling medium to be used for cooling.

On the other hand, conventionally, a thermoplastic resin has been used for an electric component such as a motor, particularly a component into which metal is inserted, in consideration of light weight, good processability, low cost, and the like. As one example of a motor component, in a resin molded article formed by inserting metal such as a busbar, there is a demand for a resin composition having excellent thermal shock resistance, in which cracking of the metal-inserted molded article does not occur even when there is a significant difference in temperature between a low temperature environment due to use in a cold district and a high temperature environment due to heat generation of the motor.

In electric automobiles, polyphenylene sulfide (hereinafter, sometimes abbreviated as PPS) resin, which has high heat resistance and high chemical resistance at high temperatures, is often used. The PPS resin is inferior in thermal shock resistance and tracking resistance to other engineering plastics. For this reason, Patent Document 1 describes a resin composition that well attains both tracking resistance and high-low-temperature impact resistance due to containing prescribed amounts of an inorganic filler and a polyolefin copolymer in a PPS resin.

Further, Patent Document 2 describes a resin composition in which thermal shock resistance, flame retardancy, and tracking resistance are all attained by blending prescribed amounts of a non-circular cross-section glass fiber, a non-fibrous inorganic filler, and a polyolefin copolymer having an epoxy group with a PPS resin.

In addition, Patent Document 3 describes a heat dissipation member for motor cooling obtained by molding a resin composition having a thermal conductivity of 0.8 W/m·K or more by containing magnesium hydroxide and glass fibers having a fiber diameter of 4 to 11 µm in prescribed amounts in a PPS resin in order to dissipate heat with high efficiency to cope with an increase in motor output.

### PRIOR ART DOCUMENTS

### PATENT DOCUMENTS

Patent Document 1: Japanese Patent Laid-open Publication No. 2020-105502
Patent Document 2: Japanese Patent Laid-open Publication No. 2023-68631
Patent Document 3: Japanese Patent Laid-open Publication No. 2012-36386

### SUMMARY OF THE INVENTION

### PROBLEMS TO BE SOLVED BY THE INVENTION

Regarding thermal management systems for batteries, inverters, motor components, and the like of electric automobiles, an air cooling type, a water cooling type, and an oil cooling type are used as cooling systems. Conventionally, there have been many cases where oil is used for motor components for the purpose of lubrication and cooling, and water (coolant), which has high thermal conductivity, is used for batteries and inverters. In recent years, since the amount of heat generation increases in such a system, the components constituting the system are required to have durability against a cooling medium. In addition, the use of oil and water (coolant) is complicatedly divided in a system, each cooling medium is precisely controlled, and a cooling medium is used in combination in an increasing number of cases. Therefore, components constituting the system are required to have high durability for any cooling medium. As for durability, it is important that a resin member to be used in a place where the environmental temperature is high due to the temperature rise of both a heat generation source and a cooling medium maintains high strength and rigidity even in a state where the resin member is immersed by the cooling medium and maintains the shape thereof without allowing cracking to occur. Therefore, in order to use a thermoplastic resin for a motor component using a cooling medium, performance of thermal shock resistance after an immersion treatment in a cooling medium is required.

However, the resin compositions disclosed in Patent Documents 1 and 2 have improved thermal shock resistance, but are not disclosed to be excellent in thermal shock resistance after an immersion treatment in a cooling medium and suitable for a motor component using a cooling medium.

The heat dissipation member for motor cooling disclosed in Patent Document 3 is a motor component, but it is not disclosed that this heat dissipation member is applied to a motor using a cooling medium.

### SOLUTIONS TO THE PROBLEMS

As a result of intensive studies to solve the above problems, the present inventors have found an unknown attribute that when a molded article formed of a PPS resin composition containing a PPS resin, an elastomer, a fibrous filler, and a non-fibrous filler satisfies prescribed characteristics, the molded article has excellent thermal shock resistance even after being subjected to a heat treatment while being immersed in a cooling medium because adhesion between the resin and metal is improved and rigidity can be maintained, and have found that a molded article having such an attribute is suitable for a motor component using a cooling medium. That is, the present invention has the following constitutions.
(1) A motor component using a cooling medium and obtained by molding a polyphenylene sulfide resin composition obtained by blending (A) a polyphenylene sulfide resin, (B) an elastomer, (C) a fibrous filler, and (D) a non-fibrous filler, the motor component being characterized in that: a tensile modulus of a molded article comprising the polyphenylene sulfide resin composition is 10 GPa or more and 21 GPa or less; and when a tensile strength of the molded article in a resin flow direction is represented as MD and a tensile strength in a direction perpendicular to the resin flow direction is represented as TD, MD is 70 MPa or more and a ratio MD/TD of MD to TD is 1.4 or less.
(2) The motor component using a cooling medium according to item (1), wherein the polyphenylene sulfide resin composition is obtained by blending (B-1) a polyolefin copolymer having an epoxy group as (B) the elastomer, and (B-1) the polyolefin copolymer having an epoxy group is blended in an amount of 0.1 parts by mass or more and less than 9 parts by mass per 100 parts by mass of (A) the polyphenylene sulfide resin.
(3) The motor component using a cooling medium according to item (1) or (2), wherein, in the polyphenylene sulfide resin composition, (D) the non-fibrous filler is blended in an amount of 60 parts by mass or more per 100 parts by mass of (A) the polyphenylene sulfide resin.
(4) The motor component using a cooling medium according to any one of items (1) to (3), wherein the cooling medium comprises at least one selected from the group consisting of a long life coolant (LLC), ethylene glycol, oil, and water.
(5) The motor component using a cooling medium according to any one of items (1) to (4), wherein the molded article comprising the polyphenylene sulfide resin composition is a metal-inserted molded article.
(6) The motor component using a cooling medium according to any one of items (1) to (5), wherein the motor component is used in one selected from the group consisting of a stator, a rotor, a slip ring, a current sensor, a busbar, a rotation angle sensor, a pipe through which a cooling medium is passed, and a member that sprays a cooling medium.
(7) The motor component using a cooling medium according to any one of items (1) to (6), wherein the thinnest part of the molded article comprising the polyphenylene sulfide resin composition has a thickness of 0.7 mm or less.
(8) The motor component using a cooling medium according to any one of items (1) to (7), wherein both MD and TD of the molded article comprising the polyphenylene sulfide resin composition are 80 MPa or more.
(9) A method of molding into a motor component using a cooling medium, the method being a method comprising molding a polyphenylene sulfide resin composition obtained by blending (A) a polyphenylene sulfide resin, (B) an elastomer, (C) a fibrous filler, and (D) a non-fibrous filler to form a molded article, wherein a tensile modulus of the molded article is 10 GPa or more and 21 GPa or less; and when a tensile strength of the molded article in a resin flow direction is represented as MD and a tensile strength in a direction perpendicular to the resin flow direction is represented as TD, MD is 70 MPa or more and a ratio MD/TD of MD to TD is 1.4 or less.
(10) The method according to item (9), wherein the polyphenylene sulfide resin composition is obtained by blending (B-1) a polyolefin copolymer having an epoxy group as (B) the elastomer, and (B-1) the polyolefin copolymer having an epoxy group is blended in an amount of 0.1 parts by mass or more and less than 9 parts by mass per 100 parts by mass of (A) the polyphenylene sulfide resin.
(11) The method according to item (9) or (10), wherein, in the polyphenylene sulfide resin composition, (D) the non-fibrous filler is blended in an amount of 60 parts by mass or more per 100 parts by mass of (A) the polyphenylene sulfide resin.
(12) The method according to any one of items (9) to (11), wherein the cooling medium comprises at least one selected from the group consisting of a long life coolant (LLC), ethylene glycol, oil, and water.
(13) The method according to any one of items (9) to (12), wherein the molded article comprising the polyphenylene sulfide resin composition is a metal-inserted molded article.
(14) The method according to any one of items (9) to (13), wherein the motor component using a cooling medium is one selected from the group consisting of a stator, a rotor, a slip ring, a current sensor, a busbar, a rotation angle sensor, a pipe through which a cooling medium is passed, and a member that sprays a cooling medium.
(15) The method according to any one of items (9) to (14), wherein the thinnest part of the molded article comprising the polyphenylene sulfide resin composition has a thickness of 0.7 mm or less.
(16) The method according to any one of items (9) to (15), wherein both MD and TD of the molded article comprising the polyphenylene sulfide resin composition are 80 MPa or more.
(17) Use, as a motor component using a cooling medium, of a molded article that is a molded article obtained by molding a polyphenylene sulfide resin composition obtained by blending (A) a polyphenylene sulfide resin, (B) an elastomer, (C) a fibrous filler, and (D) a non-fibrous filler, wherein a tensile modulus of the molded article is 10 GPa or more and 21 GPa or less; and when a tensile strength of the molded article in a resin flow direction is represented as MD and a tensile strength in a direction perpendicular to the resin flow direction is represented as TD, MD is 70 MPa or more and a ratio MD/TD of MD to TD is 1.4 or less.
(18) The use according to item (17), wherein the polyphenylene sulfide resin composition is obtained by blending (B-1) a polyolefin copolymer having an epoxy group as (B) the elastomer, and (B-1) the polyolefin copolymer having an epoxy group is blended in an amount of 0.1 parts by mass or more and less than 9 parts by mass per 100 parts by mass of (A) the polyphenylene sulfide resin.
(19) The use according to item (17) or (18), wherein, in the polyphenylene sulfide resin composition, (D) the non-fibrous filler is blended in an amount of 60 parts by mass or more per 100 parts by mass of (A) the polyphenylene sulfide resin.
(20) The use according to any one of items (17) to (19), wherein the cooling medium comprises at least one selected from the group consisting of a long life coolant (LLC), ethylene glycol, oil, and water.
(21) The use according to any one of items (17) to (20), wherein the molded article comprising the polyphenylene sulfide resin composition is a metal-inserted molded article.
(22) The use according to any one of items (17) to (21), wherein the motor component using a cooling medium is one selected from the group consisting of a stator, a rotor, a slip ring, a current sensor, a busbar, a rotation angle sensor, a pipe through which a cooling medium is passed, and a member that sprays a cooling medium.
(23) The use according to any one of items (17) to (22), wherein the thinnest part of the molded article comprising the polyphenylene sulfide resin composition has a thickness of 0.7 mm or less.
(24) The use according to any one of items (17) to (23), wherein both MD and TD of the molded article comprising the polyphenylene sulfide resin composition are 80 MPa or more.

### EFFECTS OF THE INVENTION

According to the present invention, it is possible to provide a motor component using a cooling medium, the motor component being superior in thermal shock resistance even after being immersed in a cooling medium and then subjected to a heat treatment.

### BRIEF DESCRIPTION OF THE DRAWINGS

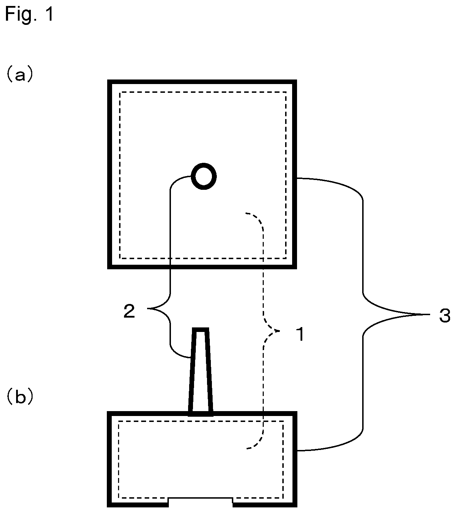

Fig. 1 is a schematic view of a molded article used for evaluation of thermal shock resistance.

### EMBODIMENTS OF THE INVENTION

The present invention has found an unknown attribute that, when a molded article comprising a PPS resin composition comprising a PPS resin, an elastomer, a fibrous filler, and a non-fibrous filler has a tensile modulus of 10 GPa or more and 21 GPa or less, and when a tensile strength of the molded article in a resin flow direction is MD and a tensile strength in a direction perpendicular to the resin flow direction is TD, the MD is 70 MPa or more and MD/TD is 1.4 or less, the molded article is superior in thermal shock resistance even after being immersed in a cooling medium and then subjected to a heat treatment, and has found that the molded article comprising the PPS resin composition can be applied to a new application, namely, a motor component using a cooling medium.

Embodiments of the present invention will be described below.

### (A) PPS resin

(A) The polyphenylene sulfide resin to be used in the present invention is a polymer having a repeating unit represented by the following structural formula.

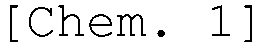

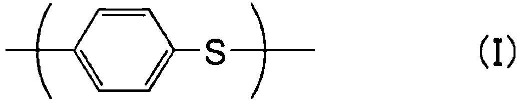

From the viewpoint of heat resistance, (A) the polyphenylene sulfide resin to be used in the present invention is preferably a polymer containing 70 mol% or more, more preferably 90 mol% or more of a repeating unit represented by the above structural formula. Further, less than 30 mol% of the repeating units in (A) the polyphenylene sulfide resin to be used in the present invention may be composed, for example, of repeating units having any of the following structures.

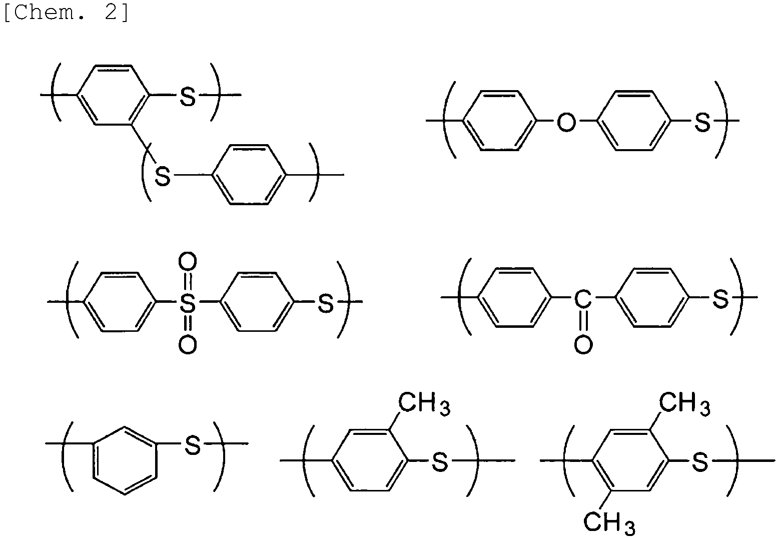

Next, a method for obtaining (A) the polyphenylene sulfide resin to be used in the present invention will be described. The method for producing the PPS resin preferably includes a preliminary step, a polymerization reaction step, a collection step, and a post-processing step, and the PPS resin can be produced by a known method. It is preferable that the raw materials and the preliminary step to be used for the production of the PPS resin conform to the method described in JP 2017-155221 A. Hereinafter, the polymerization reaction step, the collection step, and the post-processing step will be described.

### [Polymerization reaction step]

The PPS resin particulate is preferably produced by allowing a sulfidation agent to react with a polyhalogenated aromatic compound in an organic polar solvent within a temperature range of 200°C or more and 290°C.

In starting the polymerization reaction step, the sulfidation agent and the polyhalogenated aromatic compound are desirably added to the organic polar solvent in an inert gas atmosphere in a temperature range of normal temperature to 215°C, preferably 100 to 215°C. A polymerization aid may be added at this stage. These raw materials may be charged in an arbitrary order, or may be charged simultaneously.

The temperature of the mixture is usually raised to a range of 200°C to 290°C. The rate of raising temperature is not particularly limited, but usually, a rate of 0.01 to 5°C/min is preferably selected, and a range of 0.1 to 3°C/min is more preferred.

In general, the mixture is finally heated to a temperature of 250 to 290°C, and is allowed to react at that temperature usually for 0.25 to 50 hours, preferably 0.5 to 20 hours.

To obtain a higher degree of polymerization, a method is effective in which the mixture is allowed to react at a stage before reaching the final temperature, for example, at a temperature of 200°C to 245°C for a certain period of time, and then heated to 270 to 290°C. At this time, as the reaction time at 200°C to 245°C, usually, a range of 0.25 hours to 20 hours is preferably selected, and a range of 0.25 to 10 hours is more preferably selected.

To obtain a polymer with a higher degree of polymerization, it is effective to perform polymerization in a plurality of stages. In the case of performing polymerization in a plurality of stages, it is effective to raise the temperature to a next stage at the time point where the conversion rate of the polyhalogenated aromatic compound in the system at 245°C has reached 40 mol% or more, preferably 60 mol%.

### [Collection step]

After completion of the polymerization, solids are collected from the polymerization reaction product containing the polymer, the solvent, and the like.

The most preferable method of collecting a PPS resin is performed under rapid cooling conditions. One preferable method among such collection methods is, for example, a flush method. The flush method is a collection method in which the polymerization reaction product in a state of high temperature and high pressure (usually 250°C or more and 8 kg/cm² or more) is flushed into an atmosphere under ordinary pressure or reduced pressure, to collect the polymer in the form of particulates, simultaneously with the collection of the solvent. The expression "to flush" as used herein means to force the polymerization reaction product to spurt from a nozzle. Specifically, the atmosphere into which the polymerization reaction product is flushed is, for example, nitrogen or steam at ordinary pressure, and usually, the flushing temperature is preferably selected in a range of 150°C to 250°C.

The flush method makes it possible to collect solids simultaneously with the collection of a solvent and, in addition, to make the collection time relatively shorter and, thus, is a collection method excellent in economic efficiency. In this collection method, an ionic compound represented by sodium or an organic low-polymerization-degree product (oligomer) tends to be easily incorporated into a polymer in a solidification process.

However, the method for collecting the PPS resin to be used in the present invention is not limited to the flush method. A method of collecting a particulate polymer by slow cooling (quenching method) can also be used as long as the method satisfies the requirements of the present invention. In view of economic efficiency and performance, however, a PPS resin collected by the flush method is more preferably used for the present invention.

### [Post-processing step (acid treatment)]

In the present invention, it is preferable to subject the PPS resin obtained through the polymerization reaction step and the collection step to an acid treatment.

The acid to be used in the acid treatment is not particularly limited as long as the acid does not have the effect of decomposing the PPS resin. Examples of the acid include acetic acid, hydrochloric acid, sulfuric acid, phosphoric acid, silicic acid, carbonic acid, and propyl acid. Among these, acetic acid and hydrochloric acid are more preferably used. However, an acid that decomposes and degrades the PPS resin such as nitric acid is unfavorable.

When a solution of an acid in water is used, the water is preferably distilled water or deionized water. The pH of the aqueous solution of the acid is preferably 1 to 7, and more preferably 2 to 4. Setting pH to 7 or less is preferable because the metal content of the PPS resin does not increase, and setting pH to 1 or more is preferable because the amount of volatile components of the PPS resin can be suppressed.

The acid treatment preferably involves immersing the PPS resin in an acid or an aqueous solution of an acid, and it is also possible to perform stirring and heating, as necessary. The temperature during heating is preferably 80 to 250°C, more preferably 120 to 200°C, and still more preferably 150 to 200°C. Setting the temperature to 80°C or more is preferable because an acid treatment effect is obtained and the metal content does not increase, and setting the temperature to 250°C or less is preferable in terms of safety because an increase in pressure can be suppressed. In addition, when the PPS resin is treated by immersion in an aqueous solution of an acid, the pH is preferably brought to less than 8, and more preferably to a range of 2 to 8, as a result of the acid treatment. Bringing the pH to less than 8 is preferable because the metal content of the resulting PPS resin does not increase.

The time for the acid treatment is preferably a time sufficient for the reaction between the PPS resin and the acid to reach equilibrium. When the treatment is conducted at 80°C, the time is preferably 2 to 24 hours, and when the treatment is conducted at 200°C, the time is preferably 0.01 to 5 hours.

The acid treatment is preferably performed in a state where the PPS resin is sufficiently immersed in an acid or an aqueous solution of an acid. As to the ratio of the acid or the aqueous solution of an acid to the PPS resin in the acid treatment, the amount of the acid or the aqueous solution of an acid is preferably 0.5 to 500 L, more preferably 1 to 100 L, still more preferably 2.5 to 20 L, per 500 g of the PPS resin. Setting the amount of the acid or the aqueous solution of an acid to 0.5 L or more per 500 g of the PPS resin is preferable because the PPS resin is sufficiently immersed in the aqueous solution, so that deficient washing can be inhibited and the metal content of the PPS resin does not increase. On the other hand, setting the amount of the acid or the aqueous solution of an acid to 500 L or less per 500 g of the PPS resin is preferable because the amount of the solution with respect to the PPS resin does not become excessively large, so that the production efficiency is not significantly deteriorated.

The acid treatments are conducted, for example, by a method of feeding a prescribed amount of the PPS resin into a prescribed amount of water and acid, and heating and stirring the resultant in a pressure vessel, or a method of continuously performing acid treatments. As a method for separating the aqueous solution and the PPS resin from the treatment solution after the acid treatment, filtration using a sieve or a filter is simple and easy, and examples thereof include natural filtration, pressure filtration, vacuum filtration, and centrifugal filtration. The PPS resin is preferably washed several times with water or warm water to remove acid and impurities remaining on the surface of the PPS resin separated from the treatment liquid. Examples of the washing method include a method involving filtration under pouring water onto the PPS resin on a filtration device, and a method in which the separated PPS resin is first fed into water prepared in advance and then filtered again to separate the aqueous solution and the PPS resin. The water to be used for washing is preferably distilled water or deionized water.

### [Post-processing step (hot-water treatment)]

In the present invention, a hot-water treatment is preferably performed prior to the acid treatment step, and the method thereof is as described below. The water to be used for the hot-water treatment in the present invention is preferably distilled water or deionized water. The hot-water treatment temperature is preferably 80 to 250°C, more preferably 120 to 200°C, and still more preferably 150 to 200°C. Thanks to setting the hot-water treatment temperature to 80°C or more, a hot water treatment effect can be obtained and the amount of volatilized gas generation can be suppressed, and setting the hot-water treatment temperature to 250°C or less is preferable in terms of safety because an increase in pressure can be suppressed.

The time for the hot-water treatment is preferably a time for which an extraction treatment by the PPS resin and hot water is sufficiently performed. When the treatment is conducted at 80°C, the time is preferably 2 to 24 hours, and when the treatment is conducted at 200°C, the time is preferably 0.01 to 5 hours.

As to the ratio of the PPS resin to water in the hot-water treatment, it is preferable to perform the treatment with the PPS resin sufficiently immersed in the water, and the amount of the water is preferably 0.5 to 500 L, more preferably 1 to 100 L, and still more preferably 2.5 to 20 L, per 500 g of PPS resin. Setting the amount of water to 0.5 L or more per 500 g of the PPS resin is preferable because the PPS resin is sufficiently immersed in water, so that deficient washing can be inhibited and the amount of volatilized gas generation does not increase. On the other hand, setting the amount of water to 500 L or less per 500 g of the PPS resin is preferable because water is not greatly excessive with respect to the PPS resin, so that the production efficiency is not significantly deteriorated.

The operation for such a hot-water treatment is not particularly limited. The hot-water treatment is conducted, for example, by a method of feeding a prescribed amount of the PPS resin into a prescribed amount of water, and heating and stirring the resultant in a pressure vessel, or a method of continuously performing the hot-water treatment. A method for separating the aqueous solution and the PPS resin from the treatment solution after the hot-water treatment is not particularly limited, but filtration using a sieve or a filter is simple and easy, and examples thereof include natural filtration, pressure filtration, vacuum filtration, and centrifugal filtration. The PPS resin is preferably washed several times with water or warm water to remove impurities remaining on the surface of the PPS resin separated from the treatment liquid. The washing method is not particularly limited, and examples thereof include a method of performing filtration while pouring water onto the PPS resin on a filtration device, and a method in which the separated PPS resin is first fed into water prepared in advance and then filtered again to separate the aqueous solution and the PPS resin. The water to be used for washing is preferably distilled water or deionized water.

Since decomposition of PPS terminal groups during the acid treatment and the hot-water treatment is unfavorable, it is desirable to conduct the acid treatment and the hot-water treatment under an inert atmosphere. Examples of the inert atmosphere include nitrogen, helium, and argon, and a nitrogen atmosphere is preferred from the viewpoint of economic efficiency.

### [Post-processing step (washing with organic solvent)]

In the present invention, a step of washing with an organic solvent may be included before the acid treatment step or the hot-water treatment step, and the method thereof is as described below. The organic solvent to be used for washing the PPS resin in the present invention is not particularly limited, as long as the solvent does not have, for example, the effect of decomposing the PPS resin. Examples of the organic solvent include: nitrogen-containing polar solvents such as N-methyl-2-pyrrolidone, dimethylformamide, dimethylacetamide, 1,3-dimethylimidazolidinone, hexamethylphosphoramide and piperazinones; sulfoxide and sulfone solvents such as dimethyl sulfoxide, dimethyl sulfone and sulfolane; ketone solvents such as acetone, methyl ethyl ketone, diethyl ketone and acetophenone; ether solvents such as dimethyl ether, dipropyl ether, dioxane and tetrahydrofuran; halogen solvents such as chloroform, methylene chloride, trichloroethylene, ethylene dichloride, perchloroethylene, monochloroethane, dichloroethane, tetrachloroethane, perchloroethane and chlorobenzene; alcohol and phenol solvents such as methanol, ethanol, propanol, butanol, pentanol, ethylene glycol, propylene glycol, phenol, cresol, polyethylene glycol and polypropylene glycol; and aromatic hydrocarbon solvents such as benzene, toluene and xylene. Among these organic solvents, the use of N-methyl-2-pyrrolidone, acetone, dimethylformamide, chloroform or the like is particularly preferred. These organic solvents can be used singly, or as a mixture of two or more kinds thereof.

The washing with an organic solvent may be, for example, a method of immersing the PPS resin in the organic solvent, and it is also possible to perform stirring or heating, as necessary. The washing temperature for washing the PPS resin with the organic solvent is not particularly limited, and a temperature of from normal temperature to about 300°C can be preferably selected. While a higher washing temperature tends to result in a higher washing efficiency, a sufficient washing effect can be obtained usually with a washing temperature of from normal temperature to 150°C. It is also possible to perform washing in a pressure vessel, at a temperature equal to or more than the boiling point of the organic solvent, and under pressure. The washing time is not particularly limited, as well. Depending on the washing conditions, in the case of washing in a batch process, a sufficient effect can be obtained usually by performing washing for 5 minutes or more. It is also possible to perform washing in a continuous process.

The acid treatment, the hot-water treatment, and the washing with an organic solvent can be performed in combination as appropriate.

### [Post-processing step (thermal oxidation treatment)]

As the PPS resin for use in the present invention, it is preferable to use one obtained by subjecting a PPS resin to the acid treatment, the hot-water treatment or the washing with an organic solvent, and then subjecting the resulting PPS resin to a thermal oxidation treatment. The thermal oxidation treatment refers to subjecting a PPS resin to a treatment by heating in an oxygen atmosphere or heating with the addition of a peroxide, such as H₂O₂, or a vulcanizing agent, such as S, and heating in an oxygen atmosphere is particularly preferable from the viewpoint of simplicity of the treatment.

The heating apparatus for the thermal oxidation treatment of the PPS resin may be either a common hot air dryer or a heating apparatus of a rotary type or with a stirring blade. However, when it is intended to perform the treatment efficiently and more homogeneously, it is more preferred to use a heating apparatus of a rotary type or with a stirring blade. The oxygen concentration in the atmosphere in which the thermal oxidation treatment is performed is desirably adjusted to 1% by volume or more, more desirably 2% by volume or more. To exert the effect of the present invention, the upper limit of the oxygen concentration is preferably 5% by volume or less. When the thermal oxidation treatment is performed at an oxygen concentration of 5% by volume or less, the thermal oxidation treatment does not excessively proceed, and the toughness of a molded article containing the PPS resin subjected to the thermal oxidation treatment is not impaired. On the other hand, it is preferable to perform the thermal oxidation treatment at an oxygen concentration of 1% by volume or more because a sufficient thermal oxidation treatment can be performed, and a PPS resin containing a small amount of volatile components can be obtained.

The thermal oxidation treatment temperature of the PPS resin is preferably 160 to 270°C, more preferably 160 to 230°C. It is preferable to perform the thermal oxidation treatment at 270°C or less because the thermal oxidation treatment does not rapidly proceed, and the toughness of a molded article containing the PPS resin subjected to the thermal oxidation treatment is not impaired. On the other hand, it is preferable to perform the thermal oxidation treatment at a temperature of 160°C or more because the thermal oxidation treatment can proceed at an appropriate speed, and a PPS resin from which a small amount of volatile components to be generated can be obtained.

The treatment time of the thermal oxidation treatment is preferably 0.5 to 30 hours, more preferably 0.5 to 25 hours, and still more preferably 2 to 20 hours. It is preferable to set the treatment time to 0.5 hours or more because a sufficient thermal oxidation treatment can be performed, and a PPS resin containing a small amount of volatile components can be obtained. It is preferable to set the treatment time to 30 hours or less because a crosslinking reaction by the thermal oxidation treatment can be controlled, and the toughness of a molded article containing the PPS resin subjected to the thermal oxidation treatment is not impaired.

The lower limit of the melt flow rate (measured in accordance with ASTM D-1238-70 at a temperature of 315.5°C and a load of 5000 g) of the PPS resin suitably used in the present invention is preferably 100 g/10 min or more, more preferably 300 g/10 min or more. The upper limit is preferably 5000 g/10 min or less, and more preferably 3000 g/10 min or less. It is preferable that the melt flow rate is 100 g/10 min or more because a PPS resin excellent in moldability can be obtained, and it is preferable that the melt flow rate is 5000 g/10 min or less because a PPS resin excellent in mechanical strength can be obtained.

When the PPS resin to be used in the present invention is dissolved in 20-fold mass of 1-chloronaphthalene at 250°C over 5 minutes, followed by hot pressure filtration with a PTFE membrane filter having a pore size of 1 µm, the residue content is preferably 4.0 mass% or less. The fact that the residue content is more than 4.0 mass% means that the thermal oxidation crosslinking of the PPS resin excessively has proceeded and an increase in gelated products in the resin has occurred. It is preferable that the residue content is 4.0 mass% or less because the progress of the thermal oxidation crosslinking of the PPS resin is suppressed, the toughness of the PPS resin can be maintained, and the thermal shock resistance can also be maintained. The lower limit of the residue content is not particularly limited, but the residue content is preferably 1.5 mass% or more, and more preferably 1.7 mass% or more. The fact that the residue content is 1.5 mass% or more indicates that the thermal oxidation crosslinking has progressed moderately, components volatilized at the time of melting do not decrease so much, and there is a possibility that an effect of reducing volatile components is small.

Incidentally, the residue content is measured using a high-temperature filtration device and a stainless steel test tube equipped with a pneumatic cap and a collection funnel, and using, as a sample, a PPS resin pressed to form a film having a thickness of approximately 80 µm. Specifically, first, a membrane filter having a pore size of 1 µm is set in the stainless steel test tube, and then, the PPS resin pressed to form a film having a thickness of approximately 80 µm and 20-fold mass of 1-chloronaphthalene are weighed and sealed in the test tube. This sample is set in a 250°C high-temperature filtration device and shaken with heating for five minutes. Subsequently, a syringe containing air is connected to the pneumatic cap, and the piston of the syringe is pushed. Thereby, pneumatical hot filtration is performed. As to a specific method of quantitating the residue content, the residue content is determined from a difference between the mass of the membrane filter before the filtration and the mass of the membrane filter dried in vacuo at 150°C for one hour after the filtration, based on the charged mass of the PPS resin pressed to form a film.

### (B) Elastomer

The polyphenylene sulfide resin composition to be used in the present invention blends (B) an elastomer. From the viewpoint of improvement in toughness, and thermal shock resistance after an immersion treatment in a cooling medium, the lower limit of the blending amount of (B) the elastomer is preferably 1 part by mass or more, more preferably 3 parts by mass or more, and most preferably 6 parts by mass or more per 100 parts by mass of (A) the polyphenylene sulfide resin. The upper limit is preferably less than 20 parts by mass, more preferably 14 parts by mass or less, and most preferably 10 parts by mass or less per 100 parts by mass of (A) the polyphenylene sulfide resin, from the viewpoint of flame retardancy.

As (B) the elastomer in the present invention, (B-1) a polyolefin copolymer having an epoxy group is desirably blended, from the viewpoint of thermal shock resistance after an immersion treatment in a cooling medium.

(B-1) The polyolefin copolymer having an epoxy group can be obtained by introducing a monomer component having an epoxy group (a functional group-containing component) into a (co)polymer obtained by polymerizing a single α-olefin or two or more α-olefins such as ethylene, propylene, 1-butene, 1-pentene, 1-octene, 4-methyl-1-pentene, and isobutylene, or into a copolymer of α-olefin with an α,β-unsaturated acid or alkyl ester thereof, such as acrylic acid, methyl acrylate, ethyl acrylate, butyl acrylate, methacrylic acid, methyl methacrylate, ethyl methacrylate, or butyl methacrylate, for example, an ethylene/propylene copolymer ("/" represents copolymerization, and the same applies hereinafter), an ethylene/1-butene copolymer, ethylene/1-hexene, ethylene/1-octene, an ethylene/methyl acrylate copolymer, an ethylene/ethyl acrylate copolymer, an ethylene/butyl acrylate copolymer, an ethylene/methyl methacrylate copolymer, an ethylene/ethyl methacrylate copolymer, or an ethylene/butyl methacrylate copolymer. Examples of the functional group-containing component include monomers containing an epoxy group such as glycidyl acrylate, glycidyl methacrylate, glycidyl ethacrylate, glycidyl itaconate, and glycidyl citraconate. The method of introducing such a functional group-containing component is not particularly limited, and for example, a method of copolymerizing the component during the (co)polymerization for producing a polyolefin (co)polymer, or a method of grafting the component to a polyolefin (co)polymer using a radical initiator can be used. Specific examples of the particularly useful polyolefin copolymer having an epoxy group obtained by introducing a functional group-containing component into a polyolefin (co)polymer include an ethylene/propylene-g-glycidyl methacrylate copolymer ("g" represents graft, and the same applies hereinafter), an ethylene/1-butene-g-glycidyl methacrylate copolymer, an ethylene/glycidyl acrylate copolymer, an ethylene/glycidyl methacrylate copolymer, an ethylene/methyl acrylate/glycidyl methacrylate copolymer, and an ethylene/methyl methacrylate/glycidyl methacrylate copolymer. Alternatively, an epoxy group-containing polyolefin copolymer containing another monomer as an essential component in addition to an α-olefin such as ethylene or propylene and a glycidyl ester of an α,β-unsaturated acid is also suitably used.

Among (B-1) the polyolefin copolymers having an epoxy group, polyolefin copolymers having a structure derived from a glycidyl ester of an α,β-unsaturated acid are preferable from the viewpoint of improvement in toughness and thermal shock resistance after an immersion treatment in a cooling medium, and an ethylene/methyl acrylate/glycidyl methacrylate copolymer is more preferable.

From the viewpoint of obtaining thermal shock resistance after an immersion treatment in a cooling medium, the lower limit of the blending amount of (B-1) the polyolefin copolymer having an epoxy group is preferably 0.1 parts by mass or more, more preferably 1 part by mass or more, and still more preferably 2 parts by mass or more per 100 parts by mass of (A) the polyphenylene sulfide resin. From the viewpoint of obtaining flame retardancy, the upper limit of the blending amount of (B-1) the polyolefin copolymer having an epoxy group is preferably less than 9 parts by mass, preferably 7 parts by mass or less, and still more preferably 5 parts by mass or less per 100 parts by mass of (A) the polyphenylene sulfide resin.

Further, it is preferable, for obtaining superior moldability and further superior thermal shock resistance, to use (B-1) the polyolefin copolymer having an epoxy group and (B-2) the elastomer having no polar functional group in combination as (B) the elastomer. The proportions thereof are not particularly limited, but are preferably, in the mass ratio of their blending amounts per 100 parts by mass of (A) the polyphenylene sulfide resin, (B-1)/(B-2) = 5/95 to 95/5, and a range of (B-1)/(B-2) = 10/90 to 90/10 is more preferable because the balance between moldability and thermal shock resistance after an immersion treatment in a cooling medium is excellent.

On the other hand, as (B-2) the elastomer having no polar functional group, the same copolymer as the polyolefin copolymer constituting (B-1) the polyolefin copolymer having an epoxy group is preferable. In particular, an ethylene/butyl acrylate copolymer is preferable from the viewpoint of thermal shock resistance after an immersion treatment in a cooling medium.

### (C) Fibrous filler

The polyphenylene sulfide resin composition to be used in the present invention blends (C) a fibrous filler. Examples of (C) the fibrous filler include glass fibers, milled glass fibers, carbon fibers, non-circular cross-section glass fibers, cut glass fibers, metal fibers, such as stainless steel fibers, aluminum fibers and brass fibers, organic fibers, such as aromatic polyamide fibers and Kevlar (registered trademark) fibrils, gypsum fibers, ceramic fibers, asbestos fibers, zirconia fibers, alumina fibers, silica fibers, titanium oxide fibers, silicon carbide fibers, carbon nanotubes, carbon nanohorns, and cellulose nanofibers.

Among (C) the fibrous fillers, at least one selected from among glass fibers and non-circular cross-section glass fibers is preferably used from the viewpoint of mechanical strength and thermal shock resistance after an immersion treatment in a cooling medium. Among them, non-circular cross-section glass fibers are most preferable in that such non-circular cross-section glass fibers make MD/TD, which is the ratio of (MD) the tensile strength in the resin flow direction in the molded article to (TD) the tensile strength in a direction perpendicular to the resin flow direction, small and suppress the anisotropy of strength at the time of thermal shock, and excellent thermal shock resistance of a molded article subjected to an immersion treatment in a cooling medium is attained. The non-circular cross-section glass fiber is a flat cross-section glass fiber, and in a cross section of the glass fiber cut perpendicularly with respect to the length direction of the glass fiber, the ratio of a major axis (longest linear distance in the cross section) to a minor axis (longest linear distance in the direction perpendicular to the major axis) (major axis/minor axis, hereinafter referred to briefly as "flatness" in some cases) is preferably 1.3 or more and 10 or less. The flatness is preferably 1.5 or more and 7 or less, and more preferably 1.5 or more and 5 or less. When the flatness is 1.3 or more, the resin composition has good thermal shock resistance, and when the flatness is 10 or less, the resin composition has good mechanical strength. The flatness is a value determined by performing observation with a scanning electron microscope, measuring the major axis and minor axis of the cross section of 50 glass fibers randomly selected, calculating the ratio of the major axis to the minor axis, and calculating the number average thereof.

(C) The fibrous filler to be used in the present invention is preferably treated with a sizing agent or a surface treatment agent. Examples of the sizing agent or the surface treatment agent include functional compounds such as epoxy-based compounds, isocyanate-based compounds, silane-based compounds, and titanate-based compounds, and epoxy-based compounds having a high epoxy content are particularly preferable from the viewpoint of improving the reactivity of the fibrous filler and suppressing a decrease in strength due to the immersion treatment in a cooling medium.

From the viewpoint of mechanical strength and thermal shock resistance after an immersion treatment in a cooling medium, the lower limit of the blending amount of (C) the fibrous filler in the present invention is preferably 60 parts by mass or more, more preferably more than 80 parts by mass, and most preferably 100 parts by mass or more per 100 parts by mass of (A) the polyphenylene sulfide resin. The upper limit is preferably 150 parts by mass or less, and more preferably 130 parts by mass or less per 100 parts by mass of (A) the polyphenylene sulfide resin from the viewpoint of flame retardancy.

### (D) Non-fibrous filler

The polyphenylene sulfide resin composition to be used in the present invention blends (D) a non-fibrous filler. As (D) the non-fibrous filler, fullerene; silicates such as talc, wollastonite, zeolite, sericite, mica, kaolin, clay, pyrophyllite, bentonite, asbestos, and alumina silicate; metal compounds such as silicon oxide, magnesium oxide, alumina, zirconium oxide, titanium oxide, and iron oxide; carbonates such as calcium carbonate, magnesium carbonate, and dolomite; sulfates such as calcium sulfate and barium sulfate; glass beads, glass flakes, glass powders, ceramic beads, boron nitride, silicon carbide, carbon black, silica, and graphite, and the like are used. These may be hollow, and two or more of these non-fibrous fillers may be used in combination. These non-fibrous fillers may be preliminarily treated before use with a coupling agent such as an isocyanate-based compound, an organosilane-based compound, an organic titanate-based compound, an organoborane-based compound or an epoxy compound.

Among them, calcium carbonate is preferable from the viewpoint of mechanical strength and thermal shock resistance after an immersion treatment in a cooling medium.

The lower limit value of the blending amount of (D) the non-fibrous filler to be used in the present invention is preferably 40 parts by mass or more, and more preferably 60 parts by mass or more per 100 parts by mass of (A) the polyphenylene sulfide resin from the viewpoint of flame retardancy and tracking resistance. The upper limit is preferably 140 parts by mass or less, and more preferably 110 parts by mass or less per 100 parts by mass of (A) the polyphenylene sulfide resin from the viewpoint of mechanical strength and thermal shock resistance after an immersion treatment in a cooling medium.

### [Other additives]

Furthermore, to the PPS resin composition to be used in the present invention, a silane-based compound may be optionally added for the purpose of improving mechanical strength, toughness, and the like as long as the effects of the present invention are not impaired. Examples of the silane-based compound include silane compounds such as isocyanate group-containing alkoxysilane compounds such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane; epoxy group-containing alkoxysilane compounds such as γ-glycidoxypropyltrimethoxysilane, γ-glycidoxypropyltriethoxysilane, and β-(3,4-epoxycyclohexyl)ethyltrimethoxysilane; amino group-containing alkoxysilane compounds such as γ-(2-aminoethyl)aminopropylmethyldimethoxysilane, γ-(2-aminoethyl)aminopropyltrimethoxysilane, and γ-aminopropyltrimethoxysilane; and modified silicone oils having epoxy groups, amino groups, isocyanate groups, and hydroxy groups. Among them, an alkoxysilane having an epoxy group, an amino group, an isocyanate group, and a hydroxy group is particularly suitable in obtaining excellent mechanical strength and thermal shock resistance. A suitable addition amount of such a silane-based compound is preferably selected in a range of 0.05 to 3 parts by mass per 100 parts by mass of (A) the PPS resin.

Furthermore, the PPS resin composition to be used in the present invention may be further blended with another resin as long as the effects of the present invention are not impaired. Such a blendable resin is not particularly limited, and specific examples thereof include polyamide, polyethylene terephthalate, a polyether ether ketone resin, and a vinyl aromatic compound-based block copolymer.

Furthermore, in the PPS resin composition in the present invention, in order to maintain high heat resistance and thermal stability, it is preferable to blend one or more antioxidants selected from among phenol-based compounds and phosphorus-based compounds as long as the effects of the present invention are not impaired. The blending amount of such an antioxidant is preferably 0.01 parts by mass or more, particularly 0.02 parts by mass or more per 100 parts by mass of (A) the PPS resin from the viewpoint of the heat resistance improving effect, and is preferably 5 parts by mass or less, particularly 1 part by mass or less from the viewpoint of reducing gas components to be generated during molding. In addition, use of a phenol-based antioxidant and a phosphorus-based antioxidant in combination is preferable because especially a great effect of retaining heat resistance and thermal stability is obtained.

### [Method for preparing PPS resin composition]

A method for preparing the PPS resin composition in the present invention is not particularly limited, but examples thereof include a method in which each raw material is fed to a generally known melt-mixing apparatus such as a single-screw or twin screw extruder, a Banbury mixer, a kneader, or a mixing roll, and kneaded at a temperature of 280 to 380°C. The order of mixing the raw materials is not particularly limited, and the mixing may be performed by any of the following methods: a method of mixing all the raw materials, followed by melt kneading by the method described above; a method of mixing a part of the raw materials, followed by melt kneading by the method described above, and then mixing the remaining raw materials, further followed by melt kneading; and a method of mixing a part of the raw materials, and then, while melt kneading the mixture by a single-screw extruder or a twin screw extruder, mixing the remaining raw materials through the side feeder of the extruder. A small-amount additive component may be added, prior to molding, to other components kneaded and pelletized by, for example, the method above, and the resulting mixture may be subsequently molded.

The PPS resin composition in the present invention obtained in such a manner can be subjected to various types of molding such as injection molding, extrusion molding, blow molding, and transfer molding, and is particularly suitable for injection molding.

### [Molded article made of PPS resin composition]

The tensile modulus of a molded article made of the PPS resin composition in the present invention measured in accordance with ISO 527-1 and -2 (2012) needs to be 10 GPa or more and 21 GPa or less. Owing to this requirement, the molded article of the PPS resin composition is excellent in thermal shock resistance even after being subjected to an immersion treatment in a cooling medium, and can be applied even to a product that has a complicated shape and is prone to cracking, such as a motor component.

The lower limit of the tensile modulus needs to be 10 GPa or more, and is preferably 12 GPa or more, and more preferably 16 GPa or more. If the tensile modulus is less than 10 GPa, rigidity tends to decrease in an immersion treatment in a cooling medium, and a difference in linear expansion coefficient from metal tends to be large, leading to deterioration in thermal shock resistance after an immersion treatment in a cooling medium. The upper limit of the tensile modulus needs to be 21 GPa or less, and is preferably 20 GPa or less. If the tensile modulus exceeds 21 GPa, the molded article is unsatisfactory in toughness after an immersion treatment in a cooling medium, and thermal shock resistance is deteriorated.

It is possible to make the molded article made of the PPS resin composition in the present invention have a tensile modulus of 10 GPa or more by blending (A) the PPS resin with (C) the fibrous filler having a high rigidity enhancing effect and (D) the non-fibrous filler, or by reducing the blending amount of a highly flexible thermoplastic resin other than (A) the PPS resin. It is possible to make the molded article made of the PPS resin composition in the present invention have a tensile modulus of 21 GPa or less by blending (B) the elastomer having a low tensile modulus into (A) the PPS resin, or by not blending too much (C) the highly rigid fibrous filler and the non-fibrous filler (D).

When the tensile strength of the molded article made of the PPS resin composition in the present invention in a resin flow direction is represented as MD and the tensile strength in a direction perpendicular to the resin flow direction is represented as TD, MD needs to be 70 MPa or more, and MD/TD, which is the ratio of MD to TD, needs to be 1.4 or less. Owing to these requirements, the tensile strength can be maintained high even after an immersion treatment in a cooling medium, and due to making MD/TD small and suppressing the anisotropy of strength at the time of thermal shock, the cooling medium is less likely to enter between metal and the resin even after the immersion treatment in the cooling medium, and excellent thermal shock resistance is attained.

The lower limit of the MD needs to be 70 MPa or more, and is preferably 80 MPa or more. If the MD is less than 70 MPa, the tensile strength after an immersion treatment in a cooling medium decreases, so that the thermal shock resistance after the immersion treatment in the cooling medium is deteriorated. The upper limit of the MD is not particularly limited, and the higher the MD after the immersion treatment in the cooling medium is, the better the thermal shock resistance is.

The lower limit of the TD is preferably 60 MPa or more, and more preferably 80 MPa or more. It is preferable to adjust the TD to 60 MPa or more because a decrease in tensile strength after the immersion treatment in the cooling medium can be suppressed, and thermal shock resistance after the immersion treatment in the cooling medium can be maintained.

The lower limit of MD/TD, which is the ratio of the MD to the TD, is not particularly limited. In a general molded article, MD tends to be larger than TD, but in a case where the orientation of glass fibers tends to be random, such as a case where the molded article is thick, TD may be larger than MD. Practically, the lower limit of MD/TD is preferably 0.7 or more. The upper limit of MD/TD needs to be 1.4 or less, and is desirably 1.2 or less. When MD/TD is more than 1.4, the anisotropy of strength at the time of thermal shock increases, so that the cooling medium easily enters between metal and the resin after the immersion treatment in the cooling medium, and the thermal shock resistance deteriorates. In addition, MD/TD is preferably as close as possible to 1, and is most preferably 1. When MD/TD is 1, it can be determined that there is no anisotropy.

It is possible to adjust the MD to 70 MPa or more by blending (C) the fibrous filler having a high effect of increasing the mechanical strength into (A) the PPS resin, by not blending too much thermoplastic resin having a low mechanical strength in addition to (A) the PPS resin, or by using, as (D) the non-fibrous filler, a non-fibrous filler less likely to impair mechanical strength such as calcium carbonate.

The reason why MD/TD increases is that (C) the fibrous filler is easily oriented in the resin flow direction by blending (C) the fibrous filler in (A) the PPS resin. When (C) the fibrous filler is not blended, however, the mechanical strength decreases. It is possible to adjust MD/TD to 1.4 or less by blending in addition to (C) the fibrous filler, (D) a non-fibrous filler having a small non-circular ratio, for example, a non-fibrous filler such as calcium carbonate, with (A) the PPS resin, or by not blending too much (C) the fibrous filler that causes an increase in anisotropy, or by using, as (C) the fibrous filler, a fibrous filler having a high effect of suppressing anisotropy, such as a non-circular cross-section glass fiber.

In the present invention, the inventors have found an unknown attribute that a molded article made of the polyphenylene sulfide resin composition is excellent in thermal shock resistance even after the molded article is immersed in a cooling medium and subjected to a heat treatment, and have found that the molded article made of the PPS resin composition can be applied to a new application, namely, a motor component using a cooling medium.

In addition, the present invention is directed to a method of molding a motor component using a cooling medium, the method being a method comprising molding a PPS resin composition obtained by blending a PPS resin, an elastomer, a fibrous filler, and a non-fibrous filler to form a molded article, wherein a tensile modulus of the molded article is 10 GPa or more and 21 GPa or less; and when a tensile strength of the molded article in a resin flow direction is represented as MD and a tensile strength in a direction perpendicular to the resin flow direction is represented as TD, MD is 70 MPa or more and a ratio MD/TD of MD to TD is 1.4 or less.

### [Cooling medium]

The cooling medium to be used for a motor component is important for cooling a motor, and thereby preventing a decrease in the motor life and improving the drive efficiency of the motor. The cooling medium to be used for the motor component in the present invention preferably comprises at least one selected from the group consisting of a long life coolant (LLC), ethylene glycol, oil, and water, and more preferably is oil. Oil to be used as the cooling medium may be used with unintentional inclusion of water. Oil is higher in volume resistivity than, and superior in insulating properties to a long life coolant (LLC) and water. In particular, since a cooling oil for EV is superior in insulation characteristics to the conventional ATF oil and excellent in suppression of metal corrosion, that cooling oil can be used not only for driving motors but also for cooling of batteries and inverters, so that the number of kinds of cooling medium can be reduced, and weight reduction can be achieved by simplifying heat management and reducing the number of components, which is preferable. An oil having a resistivity of 30 MΩ·m or more as measured under an environment of 90°C in accordance with IEC 60247 is preferable because it has excellent insulation characteristics and suppresses deterioration of motor components. In addition, an oil having a thermal conductivity of 0.1 W/m·K or more as measured under an environment of 80°C in accordance with ASTM D2717 is preferable because it can efficiently cool components. Among them, an oil specialized for e-Axle, which has been developed exclusively for e-Axle, is preferable. A commercially available product of an oil for EV is available, for example, under the trade name of BOT805C EV from CASTROL Ltd., and this has lower viscosity and better fluidity than common ATF oils, so that this can more effectively improve the cooling performance of a motor, and is also excellent in low-corrosiveness to copper components and insulation characteristics.

As to a heat treatment method after immersion in a cooling medium, it is desirable that an article withstands a durability test for 2000 hours under an environment of 150°C, which is an upper limit temperature to which motor components are exposed.

The molded article made of the PPS resin composition in the present invention is preferably excellent in thermal shock resistance after an immersion treatment in a cooling medium at thin parts and corners. At thin parts and corners, stress generated by a difference in linear expansion coefficient between the resin and the metal in a thermal shock resistance test tends to concentrate. Furthermore, the cooling medium easily enters between the resin and the metal, and therefore the parts are poor in thermal shock resistance after an immersion treatment in a cooling medium. A molded article made of the PPS resin composition having excellent thermal shock resistance after an immersion treatment in a cooling medium at thin parts and corners can also be applied to a motor component to be used under an environment including a wide temperature range from a low temperature to a high temperature or a motor component including thin parts for the purpose of weight reduction. To be excellent in thermal shock resistance after an immersion treatment in a cooling medium at thin parts and corners, the molded article is required to be a molded article obtained by molding the polyphenylene sulfide resin composition in the present invention. Owing to this requirement, due to suppressing a decrease in strength caused by an immersion treatment in a cooling medium, and suppressing the anisotropy of strength at the time of thermal shock, the cooling medium is less likely to enter between metal and the resin even after the immersion treatment in the cooling medium, and excellent thermal shock resistance is attained.

In the molded article made of the PPS resin composition in the present invention, the flame retardancy after an immersion treatment in a cooling medium, that is, the flammability rating measured in accordance with UL94 is preferably V-0 at a test piece thickness of 0.7 mmt or less. Owing to this requirement, the molded article made of the PPS resin composition can be applied to a motor component, which is required to have flame retardancy, includes thin parts for the purpose of weight reduction, and comes into contact with a cooling medium. In order that the flammability rating after the immersion treatment in the cooling medium exhibits V-0 at a test piece thickness of 0.7 mmt or less, it is possible to increase the blending amount of (D) the non-fibrous filler as a non-combustible component or decrease the blending amount of (B) the elastomer as a combustible component, but it is desirable that the increase or decrease is within a range where thermal shock resistance after an immersion treatment in a cooling medium is not deteriorated.

The molded article made of the PPS resin composition in the present invention preferably has a Comparative Tracking Index after an immersion treatment in a cooling medium, that is, a Comparative Tracking Index as measured in accordance with IEC 60112 (2003) of 175 V or more. IEC 60664 states that, for products such as automobile components, it is undesirable to use (or it is necessary to consider not to use) a material with a Comparative Tracking Index of less than 175 V at a location with a Pollution Degree 3 in a product use environment that exceeds the rated voltage of 630 V of the product. Therefore, a molded article made of a resin composition having a Comparative Tracking Index of 175 V or more after an immersion treatment in a cooling medium can also be applied to a motor component to which a high voltage is applied, and which comes into contact with a cooling medium. It is possible to enable a molded article to exhibit a Comparative Tracking Index of 175 V or more after an immersion treatment in a cooling medium by reducing the blending amount of the polyphenylene sulfide resin, which originally has low tracking resistance, and blending large amounts of (C) the fibrous filler and (D) the non-fibrous inorganic filler, but it is desirable that such modification is made within a range where the thermal shock resistance after an immersion treatment of a cooling medium is not deteriorated.

In addition, the present invention is directed to "use for a motor component using a cooling medium" of a molded article produced by molding a PPS resin composition obtained by blending a PPS resin, an elastomer, a fibrous filler, and a non-fibrous filler, wherein a tensile modulus of the molded article is 10 GPa or more and 21 GPa or less; and when a tensile strength of the molded article in a resin flow direction is represented as MD and a tensile strength in a direction perpendicular to the resin flow direction is represented as TD, MD is 70 MPa or more and a ratio MD/TD of MD to TD is 1.4 or less.

Since the molded article made of the PPS resin composition in the present invention is excellent in thermal shock resistance after an immersion treatment in a cooling medium, the molded article is suitable as a motor component using a cooling medium, which can be used even in harsh environments involving contact with a cooling medium. As the motor component, the molded article is suitable as one "motor component using a cooling medium" selected from the group consisting of a stator, a rotor, a slip ring, a current sensor, a busbar, a rotation angle sensor, a pipe through which a cooling medium is passed, and a member that sprays a cooling medium. In particular, since the molded article is excellent in thermal shock resistance after an immersion treatment in a cooling medium, it is excellent in use for a metal-inserted motor component. In addition, the molded article is excellent as a motor component in which the thinnest part of a molded article made of a PPS resin composition of the motor component is 0.7 mm or less as a component intended for weight reduction.

Applicable uses of molded articles made of the PPS resin composition in the present invention include, for example, electrical and electronic components typified by sensors, LED lamps, consumer connectors, sockets, resistors, relay cases, switches, coil bobbins, condensers, variable condenser cases, oscillators, various terminal plates, transformers, plugs, printed boards, tuners, speakers, microphones, headphones, small motors, magnetic head bases, semiconductors, liquid crystals, FDD carriages, FDD chassis, motor brush holders, parabolic antennas, and computer related components; and components of household and office electrical appliances such as VTR parts, television parts, irons, hair dryers, rice cooker parts, microwave oven parts, acoustic parts, audio equipment parts including audio laser discs (registered trademark), and compact discs, lighting parts, refrigerator parts, air conditioner parts, typewriter parts, and word processor parts. Preferable examples of other applicable uses include mechanical components such as office computer-related parts, telephone-related parts, facsimile-related parts, copying machine-related parts, cleaning jigs, lighters, and typewriters; optical and precision equipment components such as microscopes, binoculars, cameras, and watches; water-related components such as faucet valve components, mixing faucets, pump components, pipe joints, water flow control valves, relief valves, hot water temperature sensors, water flow sensors, and water meter housings; and automotive and vehicle-related components such as alternator terminals, alternator connectors, IC regulators, potentiometer bases for lighting dimmers, exhaust gas valves, various valves, fuel system, exhaust system, and intake system pipes, air intake nozzle snorkels, intake manifolds, fuel pumps, engine coolant joints, carburetor main bodies, carburetor spacers, exhaust gas sensors, coolant sensors, oil temperature sensors, throttle position sensors, crankshaft position sensors, air flow meters, brake pad wear sensors, air conditioner thermostat bases, heater air flow control valves, radiator motor brush holders, water pump impellers, water pump housings, engine cooling modules, turbine vanes, wiper motor components, distributors, starter switches, starter relays, transmission wire harnesses, windshield washer nozzles, air conditioner panel switch boards, coils for electromagnetic valves in fuel systems, fuse connectors, horn terminals, insulating plates for electrical components, lamp sockets, lamp reflectors, lamp housings, brake pistons, solenoid bobbins, engine oil filters, ignition device cases, vehicle speed sensors, cable liners, and the like.

### EXAMPLES

The present invention will now be described in more specific detail, with reference to the following Examples. It is noted, however, that the present invention is in no way limited to the descriptions in these Examples.

### [Method of evaluating PPS resin produced in Reference Example]

### (1) Melt Flow Rate (MFR)

The melt flow rate was measured at a measurement temperature of 315.5°C and a load of 5000 g by a method in accordance with ASTM D1238-70.

### (2) Residue Content

A PTFE membrane filter having a pore size of 1 µm was preliminarily weighed and set in a stainless steel test tube including a pneumatic cap and a collection funnel manufactured by Senshu Scientific Co., Ltd. Then, 100 mg of PPS resin pressed to form a film having a thickness of approximately 80 µm and 2 g of 1-chloronaphthalene were weighed out and introduced into the test tube, which was then sealed. The sealed test tube was introduced into a high-temperature filtration device SSC-9300 manufactured by Senshu Scientific Co., Ltd., and shaken under heating at 250°C for five minutes, so that the PPS resin was dissolved in 1-chloronaphthalene. A 20-mL syringe containing air was connected to the pneumatic cap, and then, the piston was pushed to filter the solution through the membrane filter. The membrane filter was taken out, dried in vacuo at 150°C for one hour, and weighed. The difference in the mass of the membrane filter between before and after the filtration based on the charged mass of the PPS resin pressed to form a film was defined as the residue content (mass%).

### [Reference Example] Preparation of PPS

To a 70 liter autoclave with a stirrer and a bottom stop valve, 8.27 kg (70.00 mol) of 47.5% sodium hydrosulfide, 2.91 kg (69.80 mol) of 96% sodium hydroxide, 11.45 kg (115.50 mol) of N-methyl-2-pyrrolidone (NMP), 1.89 kg (23.1 mol) of sodium acetate, and 10.5 kg of ion-exchanged water were charged, and gradually heated to 245°C over about 3 hours while nitrogen was passed at ordinary pressure, 14.78 kg of water and 0.28 kg of NMP were distilled off, and then a reaction vessel was cooled to 200°C. The amount of moisture remaining in the system per 1 mol of the charged alkali metal sulfide was 1.06 mol, including the moisture consumed in the hydrolysis of NMP. The scattered amount of hydrogen sulfide was 0.02 mol per 1 mol of the charged alkali metal sulfide.

Thereafter, the reaction vessel was cooled to 200°C, and 10.45 kg (71.07 moles) of p-dichlorobenzene and 9.37 kg (94.50 moles) of NMP were added thereto. The reaction vessel was sealed under a nitrogen gas, heated from 200°C to 270°C at a rate of 0.6°C/min while stirring at 240 rpm. The resulting mixture was allowed to react at 270°C for 100 minutes, and then the bottom stop valve of the autoclave was opened. The contents were poured into the container with a stirrer under pressurized nitrogen over 15 minutes, and stirred at 250°C for a while to remove most of the NMP.

The resulting solid and 76 liters of ion-exchanged water were introduced into an autoclave with a stirrer, washed at 70°C for 30 minutes, and then, filtrated by suction through a glass filter. Then, 76 liters of ion-exchanged water heated to 70°C was poured into the glass filter, and suction filtration was performed to yield a cake.

The resulting cake and 90 liters of ion-exchanged water were fed into an autoclave with a stirrer, and supplemented with acetic acid so as to have a pH of 7. The inside of the autoclave was purged with nitrogen, then heated to 192°C, and held for 30 minutes. Then, the autoclave was cooled, and the contents were taken out.

The contents were filtrated by suction through a glass filter, and into the resulting product, 76 liters of ion-exchanged water at 70°C was poured. The resulting mixture was filtrated by suction to yield a cake. The resulting cake was dried under a nitrogen gas stream at 120°C to yield a dried PPS.

The obtained PPS had an MFR of 600 g/10 minutes and a residue content of 0.7 mass%.

The raw materials used in Examples and Comparative Examples are as shown below.

### (A) PPS resin

PPS-1: A PPS resin polymerized by the method described in Reference Example was subjected to a thermal oxidation treatment at an oxygen concentration of 2% and 220°C for 12 hours. The obtained PPS had an MFR of 400 g/10 minutes and a residue content of 1.9 mass%.

### (B) Elastomer

B-1: Ethylene-glycidyl methacrylate-methyl acrylate copolymer (BONDFAST 7M manufactured by Sumitomo Chemical Co., Ltd., ethylene: 67 mass%, glycidyl methacrylate: 6 mass%, and methyl acrylate: 27 mass%)
B-2: Ethylene-n-butyl acrylate copolymer (LOTRYL 35BA40 manufactured by Arkema S.A.)

### (C) Fibrous filler

C-1: Non-circular cross-section glass fiber (T-760FGF manufactured by Nippon Electric Glass Co., Ltd., flatness: 4)
C-2: Circular cross-section glass fiber (T-760H manufactured by Nippon Electric Glass Co., Ltd., flatness: 1)

### (D) Non-fibrous filler

D-1: Heavy calcium carbonate (ESCALON #800 manufactured by Sankyo Seifun Co., Ltd)
D-2: Magnesium hydroxide (KISUMA 5EU manufactured by Kyowa Chemical Industry Co., Ltd.)

### [Methods of measuring and evaluating molded article made of resin composition]

The methods of measurement and evaluation in the examples and comparative examples are as follows.

### (1) Tensile modulus

Resin composition pellets were fed to an injection molding machine (SE-50D) manufactured by Sumitomo Heavy Industries, Ltd., set at a cylinder temperature of 310°C and a mold temperature of 145°C, and injection-molded using a mold having the shape of a type A1 test piece prescribed in ISO 20753 (2008) under the conditions of a filling time of 0.8 s and a holding pressure of 75% of the filling pressure, affording a test piece for evaluation. The test piece was conditioned for 16 hours at 23°C and 50% relative humidity, and the tensile modulus was then measured in accordance with ISO 527-1 and ISO 527-2 (2012) under an atmosphere of 23°C and 50% relative humidity with a gripping distance of 115 mm and a test speed of 5 mm/min.

### (2) Tensile strength in flow direction (MD), tensile strength in direction perpendicular to flow direction (TD)

Resin composition pellets were fed to an injection molding machine (SE50DUZ-C160) manufactured by Sumitomo Heavy Industries, Ltd., set at a cylinder temperature of 320°C and a mold temperature of 130°C, and injection-molded using a mold for a square plate (80 mm × 80 mm × 3.0 mmt) under the conditions of a filling time of 0.5 s and a holding pressure of 50% of the filling pressure, affording a square plate (80 mm × 80 mm × 3.0 mmt). This square plate was cut into pieces of Type 3 shape prescribed in ISO 8256 such that the flow direction (injection direction) and a direction orthogonal to the flow direction coincided with their long sides, and the cut pieces were taken as a test piece for tensile strength (MD) in the flow direction and a test piece for tensile strength (TD) in a direction perpendicular to the flow direction. Each of the test pieces was conditioned for 16 hours under the conditions of 23°C and a relative humidity of 50%, and then subjected to the measurement of tensile strength under an atmosphere of 23°C and a relative humidity of 50%, under the conditions of a gauge length of 10 mm and a test speed of 1 mm/min.

### (3) Thermal shock resistance after immersion treatment in LLC

Resin composition pellets were fed to an injection molding machine (SE-50DUZ) manufactured by Sumitomo Heavy Industries, Ltd., set at a cylinder temperature of 320°C and a mold temperature of 130°C, and a metal block (carbon steel S45C) was set in a mold. Then, injection molding was performed under the conditions of an injection speed of 100 mm/s, an injection pressure determined by adding 5 MPa to the injection pressure at which the material was filling up to the tip of a test piece, and an injection time of 12 s, affording a metal-inserted test piece for evaluation illustrated in Fig. 1. This test piece was immersed in a 50 mass% aqueous solution prepared by diluting TOYOTA Genuine S-LLC with distilled water in a pressure-resistant container, and subjected to heat treatment at 150°C for 2000 hours. The test piece after being immersed in LLC was subjected to a thermal shock treatment composed, per cycle, of treatment at 130°C for 1 hour and subsequent treatment at -40°C for 1 hour, and whether cracks appeared or not was visually checked every 10 cycles. This test piece was a test piece in which the thickness of the thinnest part was as thin as 0.6 mm and stress was likely to concentrate on the corners, and was designed for evaluating thermal shock resistance of the thin part and the corners. The thermal shock resistance was evaluated by the number of cycles in which cracking was observed. It can be said that there is no problem in practical use when cracks are not generated for 100 cycles or more, but the larger the number of times of treatment until generation of cracks is, the better the thermal shock resistance is and the more preferable it is.

### (4) Thermal shock resistance after immersion treatment in oil

Resin composition pellets were fed to an injection molding machine (SE-50DUZ) manufactured by Sumitomo Heavy Industries, Ltd., set at a cylinder temperature of 320°C and a mold temperature of 130°C, and a metal block (carbon steel S45C) was set in a mold. Then, injection molding was performed under the conditions of an injection speed of 100 mm/s, an injection pressure determined by adding 5 MPa to the injection pressure at which the material was filling up to the tip of a test piece, and an injection time of 12 s, affording a metal-inserted test piece for evaluation illustrated in Fig. 1. This test piece was immersed in cooling oil for EV (BOT805C EV manufactured by CASTROL Ltd.) in a pressure-resistant container, and subjected to heat treatment at 150°C for 2000 hours. The test piece after being immersed in oil was subjected to a thermal shock treatment composed, per cycle, of treatment at 130°C for 1 hour and subsequent treatment at -40°C for 1 hour, and whether cracks appeared or not was visually checked every 10 cycles. This test piece was a test piece in which the thickness of the thinnest part was as thin as 0.6 mm and stress was likely to concentrate on the corners, and was designed for evaluating thermal shock resistance of the thin part and the corners. The thermal shock resistance was evaluated by the number of cycles in which cracking was observed. It can be said that there is no problem in practical use when cracks are not generated for 100 cycles or more, but the larger the number of times of treatment until generation of cracks is, the better the thermal shock resistance is and the more preferable it is.

### (5) Flame retardancy after immersion treatment in oil

Resin composition pellets were fed to an injection molding machine (SE-50D) manufactured by Sumitomo Heavy Industries, Ltd., set at a cylinder temperature of 320°C and a mold temperature of 145°C. Then, injection molding was performed using a mold having a cavity shape matching the UL test piece shape prescribed in UL94, under the conditions of an injection speed of 120 mm/s, an injection pressure determined by adding 5 MPa to the injection pressure at which the material was filling up to the tip of a test piece, an injection time of 8 s, and a cooling time of 10 s, affording a test piece for evaluation. This test piece was immersed in cooling oil for EV (BOT805C EV manufactured by CASTROL Ltd.) in a pressure-resistant container, and subjected to heat treatment at 150°C for 2000 hours. Using the test piece after being immersed in oil, the flame retardancy was evaluated in accordance with the UL94 vertical test. The flammability rating was ranked in the descending order of V-0 > V-1 > V-2, and the flammability rating falling short of the criteria of V-2 was indicated by V-out. As a test piece, one having a thickness of 0.7 mm is used, and it is preferable that a rating V-0 is exhibited at a test piece thickness of 0.7 mm or less.

### (6) Comparative Tracking Index after immersion treatment in oil

Resin composition pellets were fed to an injection molding machine (SE50DUZ-C160) manufactured by Sumitomo Heavy Industries, Ltd., set at a cylinder temperature of 320°C and a mold temperature of 130°C, and injection-molded using a mold for a square plate (80 mm × 80 mm × 3.0 mmt) under the conditions of a filling time of 0.5 s and a holding pressure of 50% of the filling pressure, affording a square plate (80 mm × 80 mm × 3.0 mmt). This test piece was immersed in cooling oil for EV (BOT805C EV manufactured by CASTROL Ltd.) in a pressure-resistant container, and subjected to heat treatment at 150°C for 2000 hours. Using the test piece after being immersed in oil, the maximum voltage at which no tracking breakdown occurred was measured in accordance with IEC 60112 (2003). The electrolytic solution used was a 0.1% aqueous ammonium chloride solution. The greater the maximum voltage is, the better the tracking resistance is, and the maximum voltage is preferably 175 V or more.

### [Examples 1 to 6, Comparative Examples 1 to 7]

Using a twin-screw extruder (TEM-26SS manufactured by TOSHIBA MACHINE Co., Ltd.) having an intermediate addition port 26 mm in diameter and set to a cylinder temperature of 320°C and a screw rotation speed of 400 rpm, (B) the elastomer and (D) the non-fibrous filler were added through a raw material feed port to 100 parts by mass of (A) the PPS resin at the mass ratios shown in Tables 1 and 2, and the mixture was brought into a molten state. Then, (C) the fibrous filler was fed through the intermediate addition port at a mass ratio shown in Tables 1 and 2, and the mixture was melt-kneaded at a discharge rate of 30 kg/hour, affording PPS resin composition pellets. Using the PPS resin composition pellets, the characteristics described above were evaluated. The results are shown in Tables 1 and 2.

**[Table 1]**

| | | Unit | Example 1 | Example 2 | Example 3 | Example 4 | Example 5 | Example 6 |
|---|---|---|---|---|---|---|---|---|
| (A) PPS | PPS-1 | Parts by mass | 100 | 100 | 100 | 100 | 100 | 100 |
| (B) Elastomer | B-1 | | 3 | 9 | 12 | 14 | 14 | 3.1 |
| | B-2 | | 6 | 4 | 6 | 5 | | 6.2 |
| (C) Fibrous filler | C-1 | | 106 | | | 95 | 76 | 151 |
| | C-2 | | | 69 | 122 | | | |
| (D) Non- fibrous filler | D-1 | | 86 | 32 | 61 | 54 | 58 | 47 |
| | D-2 | | | | | | | |
| Tensile modulus | | GPa | 20 | 13 | 17 | 15 | 15 | 21 |
| MD | | MPa | 90 | 100 | 105 | 100 | 85 | 100 |
| TD | | MPa | 95 | 75 | 75 | 90 | 80 | 95 |
| MD/TD | | - | 0.95 | 1.3 | 1.4 | 1.1 | 1.1 | 1.1 |
| Thermal shock resistance after immersion treatment in LLC | | Cycles | > 1000 | 135 | 100 | > 1000 | > 1000 | > 1000 |
| Thermal shock resistance after immersion treatment in oil | | Cycles | > 1000 | 160 | 100 | > 1000 | > 1000 | > 1000 |
| Flammability rating after immersion treatment in oil (0.7 mmt) | | - | V-0 | V-2 | V-2 | V-2 | V-2 | V out |
| Comparative Tracking Index after immersion treatment in oil | | V | 200 | 150 | 175 | 150 | 150 | 175 |

**[Table 2]**

| | | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| (A) PPS | PPS-1 | Parts by mass | 100 | 100 | 100 | 100 | 100 | 100 | 100 |
| (B) Elastomer | B-1 | | | | 2 | | 3 | 3.1 | 9 |
| | B-2 | | | | | | 5 | 6.2 | |
| (C) Fibrous filler | C-1 | | | | | | | 57 | 24 |
| | C-2 | | 69 | 133 | 103 | 25 | 103 | | |
| (D) Non- fibrous filler | D-1 | | | 60 | | | | 141 | 22 |
| | D-2 | | | | | | 68 | | |
| Tensile modulus | | GPa | 16 | 23 | 18 | 9 | 21 | 19 | 11 |
| MD | | MPa | 110 | 100 | 115 | 69 | 69 | 60 | 65 |
| TD | | MPa | 70 | 45 | 65 | 60 | 26 | 55 | 60 |
| MD/TD | | - | 1.6 | 2.2 | 1.8 | 1.2 | 2.6 | 1.1 | 1.1 |
| Thermal shock resistance after immersion treatment in LLC | | Cycles | 5 | 0 | 40 | 50 | 0 | 5 | 70 |
| Thermal shock resistance after immersion treatment in oil | | Cycles | 10 | 0 | 70 | 50 | 0 | 5 | 80 |
| Flammability rating after immersion treatment in oil (0.7 mmt) | | - | V-0 | V-0 | V-0 | V-0 | V-0 | V-0 | V-1 |
| Comparative Tracking Index after immersion treatment in oil | | V | 125 | 175 | 150 | 125 | 400 | 200 | 125 |

In Examples 1 to 6, it was found that the molded articles were excellent in thermal shock resistance (100 cycles or more) after being subjected to the heat treatment while being immersed in a cooling medium and were suitable for motor components using a cooling medium thanks to the fact that the components (A) to (D) were blended and the tensile modulus of the molded articles was 10 GPa or more and 21 GPa or less, and when the tensile strength of a molded article in the resin flow direction was represented as MD and the tensile strength in the direction perpendicular to the resin flow direction was represented as TD, MD was 70 MPa or more and MD/TD was 1.4 or less.

From Comparative Examples 1 and 3, it was found that, due to the fact that MD/TD was larger than 1.4, the thermal shock resistance after being subjected to the heat treatment while being immersed in a cooling medium was poor.

From Comparative Example 2, it was found that, due to the fact that the tensile modulus was larger than 21 GPa and the MD/TD was larger than 1.4, the thermal shock resistance after being subjected to heat treatment while being immersed in a cooling medium was poor.

From Comparative Example 4, it was found that, due to the fact that the tensile modulus was smaller than 10 GPa and the MD was smaller than 70 MPa, the thermal shock resistance after being subjected to the heat treatment while being immersed in a cooling medium was poor.

From Comparative Example 5, it was found that when the MD was smaller than 70 MPa and the MD/TD was larger than 1.4, the thermal shock resistance after being subjected to the heat treatment while being immersed in a cooling medium was poor.

From Comparative Examples 6 and 7, it was found that, due to the fact that the MD was smaller than 70 MPa, the thermal shock resistance after being subjected to the heat treatment while being immersed in a cooling medium was poor.

### INDUSTRIAL APPLICABILITY

The molded article of the present invention is suitable as a metal-inserted motor component using a cooling medium, such as a busbar or a current sensor, which will come into contact with a cooling medium because the molded article is excellent in thermal shock resistance after an immersion treatment in a cooling medium without greatly impairing excellent flame retardancy which a polyphenylene sulfide resin inherently has.

### DESCRIPTION OF REFERENCE SIGNS

- 1:: Insert metal
- 2:: Gate
- 3:: Metal-inserted molded article

## Claims

1. A motor component using a cooling medium and obtained by molding a polyphenylene sulfide resin composition obtained by blending (A) a polyphenylene sulfide resin, (B) an elastomer, (C) a fibrous filler, and (D) a non-fibrous filler, the motor component being **characterized in that**: a tensile modulus of a molded article comprising the polyphenylene sulfide resin composition is 10 GPa or more and 21 GPa or less; and when a tensile strength of the molded article in a resin flow direction is represented as MD and a tensile strength in a direction perpendicular to the resin flow direction is represented as TD, MD is 70 MPa or more and a ratio MD/TD of MD to TD is 1.4 or less.

2. The motor component using a cooling medium according to claim 1, wherein the polyphenylene sulfide resin composition is obtained by blending (B-1) a polyolefin copolymer having an epoxy group as (B) the elastomer, and (B-1) the polyolefin copolymer having an epoxy group is blended in an amount of 0.1 parts by mass or more and less than 9 parts by mass per 100 parts by mass of (A) the polyphenylene sulfide resin.

3. The motor component using a cooling medium according to claim 1 or 2, wherein, in the polyphenylene sulfide resin composition, (D) the non-fibrous filler is blended in an amount of 60 parts by mass or more per 100 parts by mass of (A) the polyphenylene sulfide resin.

4. The motor component using a cooling medium according to claim 1 or 2, wherein the cooling medium comprises at least one selected from the group consisting of a long life coolant (LLC), ethylene glycol, oil, and water.

5. The motor component using a cooling medium according to claim 1 or 2, wherein the molded article comprising the polyphenylene sulfide resin composition is a metal-inserted molded article.

6. The motor component using a cooling medium according to claim 1 or 2, wherein the motor component is used in one selected from the group consisting of a stator, a rotor, a slip ring, a current sensor, a busbar, a rotation angle sensor, a pipe through which a cooling medium is passed, and a member that sprays a cooling medium.

7. The motor component using a cooling medium according to claim 1 or 2, wherein the thinnest part of the molded article comprising the polyphenylene sulfide resin composition has a thickness of 0.7 mm or less.

8. The motor component using a cooling medium according to claim 1 or 2, wherein both MD and TD of the molded article comprising the polyphenylene sulfide resin composition are 80 MPa or more.

9. A method of molding into a motor component using a cooling medium, the method being a method comprising molding a polyphenylene sulfide resin composition obtained by blending (A) a polyphenylene sulfide resin, (B) an elastomer, (C) a fibrous filler, and (D) a non-fibrous filler to form a molded article, wherein a tensile modulus of the molded article is 10 GPa or more and 21 GPa or less; and when a tensile strength of the molded article in a resin flow direction is represented as MD and a tensile strength in a direction perpendicular to the resin flow direction is represented as TD, MD is 70 MPa or more and a ratio MD/TD of MD to TD is 1.4 or less.

10. Use, as a motor component using a cooling medium, of a molded article that is a molded article obtained by molding a polyphenylene sulfide resin composition obtained by blending (A) a polyphenylene sulfide resin, (B) an elastomer, (C) a fibrous filler, and (D) a non-fibrous filler, wherein a tensile modulus of the molded article is 10 GPa or more and 21 GPa or less; and when a tensile strength of the molded article in a resin flow direction is represented as MD and a tensile strength in a direction perpendicular to the resin flow direction is represented as TD, MD is 70 MPa or more and a ratio MD/TD of MD to TD is 1.4 or less.
